# EUROPEAN PATENT APPLICATION

(11) **EP 2 106 692 A1**
(43) Date of publication of application: **07.10.2009**
(21) Application number: 09157048.1
(22) Date of filing: 01.04.2009
(51) Int. Cl.: A01G 23/089

(54) **Timber cutting device and timber harvester utilizing the device**

(30) Priority: 01.04.2008 FI 20085269
(71) Applicant: Moisio Forest OY, 44670 Suovanlahti (FI)
(72) Inventor: Moisio, Tuomas, 44500, Viitasaari (FI)
(74) Representative: Helke, Kimmo Kalervo

(57) **Abstract**

The invention relates to a timber cutting device for a timber harvester, in which cutting device there are guillotine blades (2, 3) pivoted at one end to a frame (1), and operating devices (4, 5) for operating the guillotine blades (2, 3). In at least one guillotine blade (2, 3), there is at least one tooth (T) to prevent the tree from escaping between the guillotine blades and in at least one guillotine blade (2, 3) there are two blade portions (9, 10) at an angle of 60° - 140° to each other, this angle thus forming the said tooth (T).

## Description

The present invention relates to a timber cutting device, in which cutting device there are guillotine blades pivoted at one end to a frame, and operating devices for operating the guillotine blades, and in which device the guillotine blades that rotate against each other cut the cross-section of the throat as they rotate around their pivot point. The invention also relates to a timber harvester utilizing the timber cutting device.

Conventional timber cutting blades have the problems that the straight cutting surface rejects the timber in the cutting situation and that insufficient force is available for cutting. The placing of traditional cutting blades in a timber-feeding grab has also been a problem. The cutting blades often obstruct the feeding of the timber.

Various types of timber cutting devices equipped with guillotine blades are disclosed in the following patent publications US 5,697,412, WO95/01094, and US 4,186,729. The guillotine blades are pivoted at one end to a frame and, when they rotate, they travel across the throat, thus cutting the trees through. With large trees, the guillotine blades are at a considerable angle to each other at the start of cutting. Due to this, the tree easily slides outwards from the pivot, thus reducing the cutting force.

In the aforementioned publications, a suitable grab is used to hold the trees being cut in the throat, so that the trees will not slip out of the throat. The trees then slide against the grab. In terms of the present invention, the most important publication is US 4,186,729, in which suitable spikes are welded to the guillotine blades, thus forming teeth in connection with the blade. These hold the tree in place in the throat during cutting.

The present invention is intended to improve the cutting geometry in a simple manner and to eliminate the defects observed in known cutting devices. The timber cutting device according to the invention is characterized by there being, in at least one guillotine blade, two blade portions set at an angle of 60° - 140° to each other, this angle forming the said tooth. The blades are preferably symmetrical and in both blades there is a tooth formed by the angle between the blade portions. Because, at the angle between the sharpened blade portions, the blade surface supporting the sharp point diminishes to almost nothing, it is easily damaged. In fact, on the basis of practical tests, the sharp point is not needed, instead the angle can be bevelled or rounded. The blunt portion is sufficiently pointed for it not to impede the operation of the cutting device. The lengths of the blade portions are arranged asymmetrically, preferably in such a way that the shorter blade portion is next to the pivot.

The invention's idea is to prevent the tree from sliding along the cutting surface, to maximize the cutting force, and to also operate in a timber-feeding grab. Hereinafter, reference will be made to a 'triangular'-model blade, because initially, in addition to the blade portions at the angle, there was a third, straight side, forming a complete triangle. The third side can, however, have some other, for example, curved shape, as in some of the examples hereinafter. An outwardly curved blade provides greater length for the attachment side.

In a downwardly facing throat, the triangular blade forces the tree upwards, i.e. the tree does not slide along a straight plate surface, as in traditional straight cutting blades. On the first side of the triangular blade, a great cutting power is achieved in the direction of the radius of the pivot, compared to traditional one-sided cutting blades. The length of this short blade portion 10, together with the pivot attachment, i.e. the size of the distance from the angle to the pivot point is 45 - 65 %, preferably 50 - 60 % of the second blade portion.

As the attachment points of the triangular blades are at the sides, the blade plates are not in the road of the timber feed.

In the following, the invention is described with the aid of examples and the accompanying drawings, which show in detail some cutting devices according to the invention.
- Figure 1: shows a front view of the cutting device, with the throat fully open;
- Figures 2 and 3: show the cutting device of Figure 1 in a sub-stage of the cutting movement of the guillotine blades;
- Figure 4: shows the cutting device with the guillotine blades fully closed;
- Figures 5 - 7: show various types of blade profile of a guillotine blade;
- Figures 8 and 9: show a solution for protecting the angle of the blade portions; and
- Figure 10: shows a cross-section of the blade geometry in the situation of Figure 4.

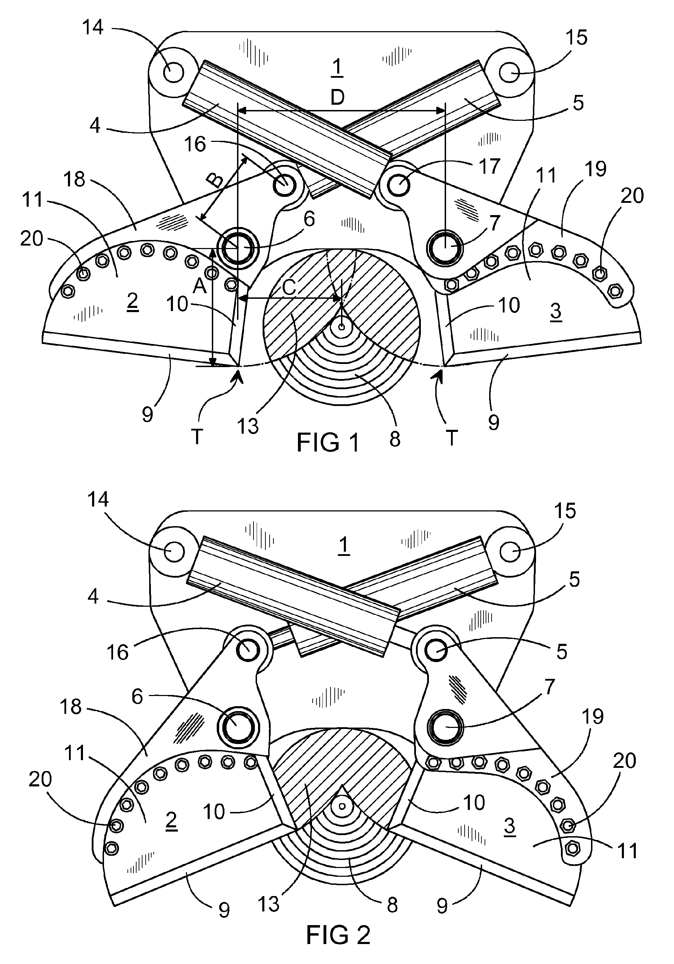

According to Figure 1, the timber cutting device comprises a frame (1), guillotine blades (2, 3), which are pivoted at the attachment points (6, 7) on the frame, and cylinders (4, 5), which move each guillotine blade (2, 3). The upper end of each cylinder (4, 5) is attached to the frame (1) at the attachment point (14, 15) while the lower end of the cylinder (4, 5) is attached to a pivot (16, 17) on the corresponding guillotine blade (2, 3).

Each guillotine blade (2, 3) is formed of a shorter blade side (10) and a longer blade side (9). The possibility for the guillotine blades to be asymmetrical (not shown) is in no way excluded.

The dimension (A) states the distance from the rotation point (6) of the triangular blade (2) to the end of the blade side (10) of the triangular blade (2). This dimension is the same as the radius of the cutting groove (13) formed in the tree (8).

The dimension (B) states the distance from the rotation point (6) of the triangular blade (2) to the attachment point (16) of the cylinder (5) of the triangular blade (2). This dimension gives the power ratio of the cylinder (5) to the triangular blade (2).

The dimension (C) states the distance from the centre point of the tree to the rotation point (6) of the triangular blade (2). The dimension (D) states the distance between the triangular blades (2 and 3). The dimensions (C) and (D) determine the space at the tree (8). The location of the guillotine blades (2, 3) at the sides of the structure provides plenty of space for the timber (8) feed.

The following is a description of the operation of the cutting device. Figure 1 shows the initial situation, before the cutting of the tree (8). The length ratio between the dimensions (A) and (B) should be noted. The greater dimension (B) is relative to dimension (A), the greater the force acting on the blade side (11) of the triangular blade (2), which means greater cutting power. In Figures 1, 2, 3, and 4, the dimensions (A and B) have the same length.

The opposing first blade sides (10) of the guillotine blades (2, 3) when rotating, each cut the cutting groove (13) inside the tree (8). One blade portion (10) is essentially parallel to the direction of the radius drawn from the pivot (6, 7) of the guillotine blade (2, 3) and the cutting share of this blade portion (10) of the largest tree fitting into the throat is 20 - 30 %, preferably 24 - 27 %, of the entire cross-sectional area to be cut.

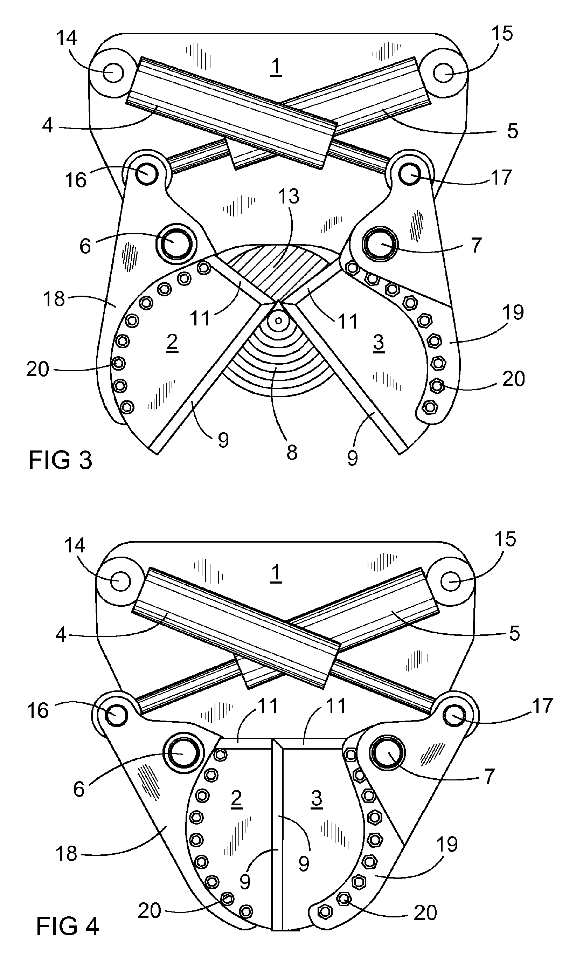

When the triangular blades (2 and 3) begin to press through the tree (8), the first blade sides (11 and 12) of the triangular blades (2 and 3) penetrate the tree (8), Figures 2 and 3.

The shorter blade sides (10) of the guillotine blades (2 and 3) have a great compressive force on the tree (8), due to the power ratio between the dimensions (A and B). This allows the guillotine blade to cut the tree with less force than traditional straight blade plates.

The guillotine blades (2 and 3) push the tree (8) towards the frame structure (1). This means that the tree cannot slip out away from the frame.

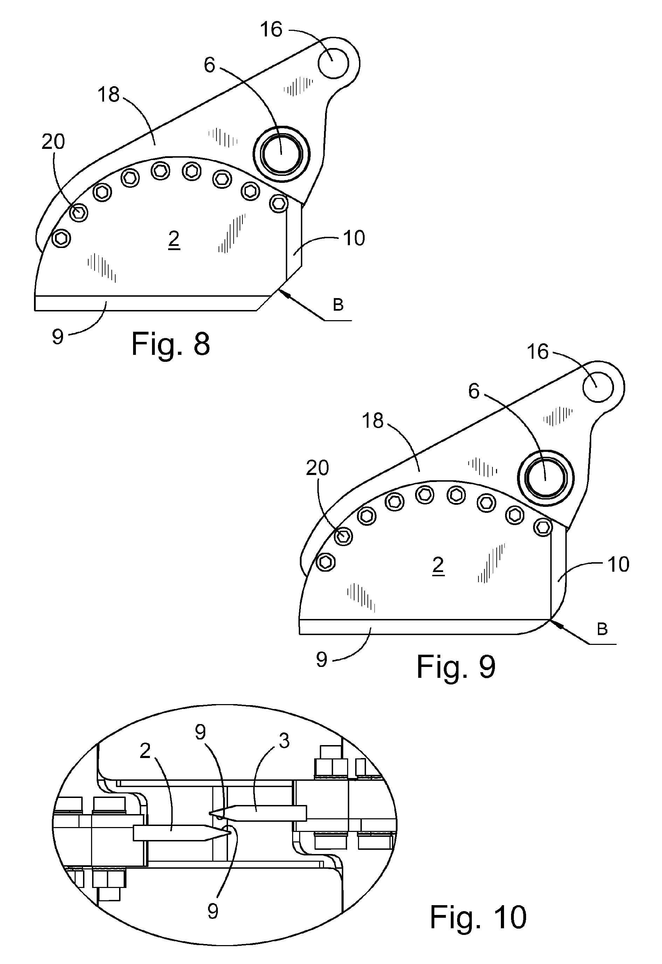

The guillotine blades (2 and 3) are located on different planes and, when they rotate against each other, they go on top of each other, Figures 4 and 10. This means that the cutting shape (13) of the first blade sides (10) of the guillotine blades (2 and 3) can go on top of each other without the angles, i.e. teeth (T) between their blade sides, striking each other. As the guillotine blades (2 and 3) go on top of each other when they close, even small branches are cut, and, for example, wear in the triangular blades (2 and 3) will not leave an empty cross-section area between the blade plates.

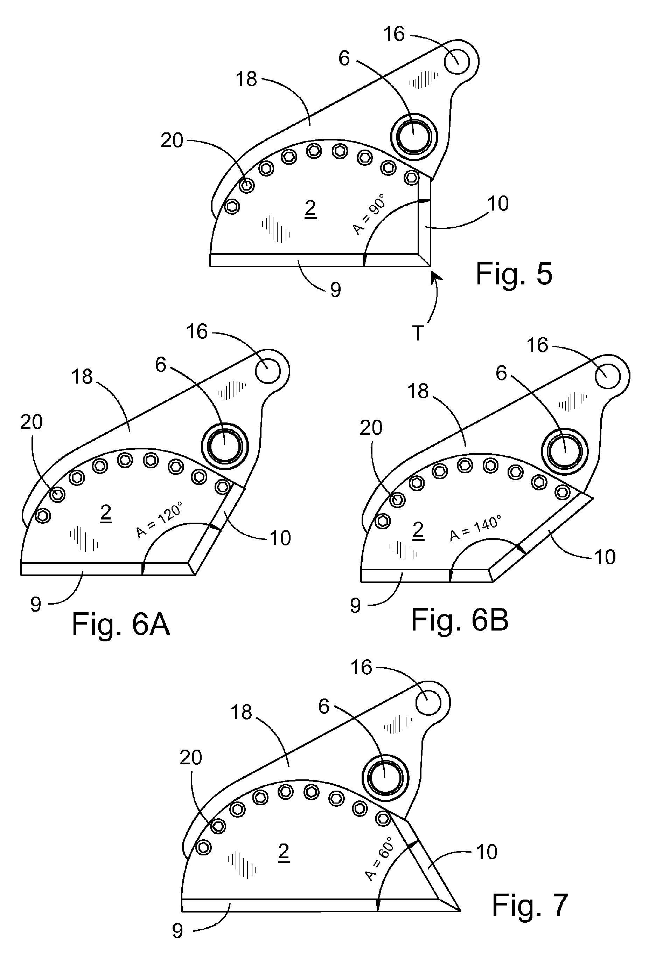

In each guillotine blade (2, 3), the blade portions (9, 10) are at an angle of 60° - 140°, preferably 80° - 120° to each other, this angle forming the said tooth (T). Figures 5 - 7 show different angles. At the extreme values, operation may become difficult.

Because a corner sharpened from two directions is easily bent, the corner between the blade portions (9, 10), i.e. the said tooth (T) is bevelled or rounded to be at least to some extent blunt. In one embodiment, the guillotine blade (2, 3) is essentially of full thickness in the tooth (T) formed in the angle between the blade portions (9, 10), in order to prevent it breaking.

The guillotine blade (2, 3) is preferably formed to be a detachable blade component. The blade component is a plate piece, in which there is a curved attachment side (11) joining the sides of the blade portions at an angle together at their outer ends. In Figures 1 - 9, the curved attachment side (11) of the blade components (2, 3) is attached to the blade frames (18) and (19) by means of bolts (20).

## Claims

1. Timber cutting device for a timber harvester, in which cutting device there are guillotine blades (2, 3) pivoted at one end to a frame (1), and operating devices (4, 5) for operating the guillotine blades (2, 3), and in which the guillotine blades (2, 3) that rotate against each other cut the cross-section of the throat as they rotate around their pivot points (6, 7), and in which in at least one guillotine blade (2, 3) there is at least one tooth (T) to prevent the tree from escaping between the guillotine blades, **characterized in that** in at least one guillotine blade (2, 3) there are two blade portions (9, 10) at an angle of 60° - 140° to each other, this angle thus forming the said tooth (T).

2. Cutting device according to Claim 1, **characterized in that** the angle between the blade portions (9, 10) is 80° - 120°.

3. Cutting device according to Claim 1 or 2, **characterized in that** the angle between the blade portions (9, 10) is bevelled.

4. Cutting device according to Claim 1 or 2, **characterized in that** the angle between the blade portions (9, 10) is rounded.

5. Cutting device according to Claim 3 or 4, **characterized in that** the guillotine blade (2, 3) is of essentially full thickness in the tooth (T) forming the angle between the blade portions (9, 10), in order to prevent it breaking.

6. Cutting device according to any of Claims 1 - 5, **characterized in that** the guillotine blade (2, 3) is formed as a detachable blade component.

7. Cutting device according to Claim 6, **characterized in that** the blade component is a plate piece, in which there is a curved attachment side (11) connecting the sides of the blade portions at an angle to each other at their outer ends.

8. Cutting device according to any of Claims 1 - 7, **characterized in that** one blade portion (10) is essentially in the direction of the radius drawn from the pivot (6, 7) of the guillotine blade (2, 3) and the cutting share of this blade portion (10) of the largest tree fitting into the throat is 20 - 30 %, preferably 24 - 27 % of the entire cross-sectional area to be cut.

9. Timber harvester, **characterized in that** there is a timber cutting device according to any of Claims 1 - 5 in it.
